# EUROPÄISCHE PATENTANMELDUNG

(11) **EP 3 441 291 A1**
(43) Veröffentlichungstag der Anmeldung: **13.02.2019**
(21) Anmeldenummer: 17001370.0
(22) Anmeldetag: 10.08.2017
(51) Int. Cl.: B62J 1/00

(54) **ERGONOMISCHER FAHRRADSATTEL ZUR DRUCKENTLASTUNG DER SITZKNOCHEN**

(71) Anmelder: SQlab GmbH, 82024 Taufkirchen (DE)
(72) Erfinder: HILD, Tobias, 82024 Taufkirchen (DE)
(74) Vertreter: Koelle, Alexander

(57) **Zusammenfassung**

Die Erfindung offenbart einen Zweiradsattel (100), aufweisend:
- eine Sattelbasis (102) mit einer ersten Elastizität, die sich von der Sattelnase (118) unter dem Gesäß eines Anwenders erstreckt, wobei an der Sattelbasis (102) zumindest ein Befestigungselement (104) zum Befestigen des Zweiradsattels (100) an einem Rahmen eines Zweirads vorgesehen ist;
- eine elastische Schicht (106), die thermoplastisches Polyurethan (TPU), vorzugsweise expandiertes thermoplastisches Polyurethan (E-TPU), aufweist und die sich über die die Sattelbasis (102) zumindest im Bereich unterhalb des Gesäßes des Nutzers erstreckt, wobei die elastische Schicht (106) eine zweite Elastizität aufweist, die elastischer als die erste Elastizität ist;
- ein erstes Gesäßknochenauflageelement (108), das dazu ausgebildet ist, sich zumindest über einen Teil des rechten Gesäßknochens eines Nutzers zu erstrecken; und
- ein zweites Gesäßknochenauflageelement (110), das dazu ausgebildet ist, sich zumindest über einen Teil des linken Gesäßknochens eines Nutzers zu erstrecken;
- wobei das erste Gesäßknochenauflageelement (108) und das zweite Gesäßknochenauflageelement (110) auf der elastischen Schicht (106) beabstandet zueinander angeordnet sind.

## Beschreibung

### Technisches Gebiet

Die Erfindung betrifft einen verbesserten Sattel für ein Zweirad. Unter einem Zweirad wird ein lenkergeführtes Fahrrad, beispielsweise ein übliches Fahrrad, ein Mountain-Bike, ein Rennrad, ein Motorrad und ein Mofa, aber auch ein Motorrad (Trike) mit zwei hinteren Antriebsrädern und einem Vorderrad verstanden.

### Stand der Technik

Bekannt sind herkömmliche Ausführungsformen eines Sattels für Zweiräder, wobei insbesondere bei Sätteln für Rennräder die Form bislang so gestaltet wurde, dass das Körpergewicht auf dem Dammbereich und weniger auf den Sitzknochen bzw. Gesäßknochen lastet.

Nachteil ist dieser Sattelformen ist, dass bei Männern auf den Dammbereich und bei Frauen im Bereich des Schambeins ein zu hoher Druck lastet. Es besteht die Gefahr, dass beim Mann der hohe Druck im Dammbereich negative Auswirkungen auf die sexuelle Leistungsfähigkeit des Mannes haben kann. Bei Frauen liegt das Schambein etwas tiefer als beim Mann, so dass dieses meistens schmerzhaft auf die Sattelnase drückt. In der Vergangenheit gab es verschiedene Lösungsansätze verschiedener Sattelhersteller, den Druck im Dammbereich oder im Bereich des Schambeins zu senken, beispielsweise durch die Verwendung einer weichen Sattelnase, beispielsweise durch die Verwendung von Gel oder von Aussparungen und Löchern im Sattel. Sättel mit derartigen Merkmalen sind bereits aus EP 1 394 025 und aus US 5 356 205 bekannt geworden. Mit diesen Sätteln kann jedoch noch nicht eine ausreichende Druckentlastung im Dammbereich bzw. Schambeinbereich erreicht werden.

Ferner ist bekannt, zur Erhöhung des Komfort eines Nutzers zwischen einer Sattelschale, auf der der Nutzer abgesehen von Polsterungen sitzt und dem Trägerelement, mittels dem der Sattel am Zweirad befestigt ist, einen elastischen Körper, beispielsweise einen Elastomerkörper anzuordnen. Ein derartiger Fahrradsattel wird beispielsweise in EP 2 085 302 A2, DE 20 2008 018 006 U1, DE 201 09 883 U1, EP 2 003 046 B1, WO 02/055366 A1 und DE 20 2015 005 873 U1 beschrieben.

Die WO 2017/032796 A1 offenbart, dass der elastische Körper aus einem thermoplastischen Polyurethan (TPU) ausgebildet ist.

Das weltweit erste expandierte thermoplastische Polyurtethan (E-TPU) wird von der Fa. BASF hergestellt und unter dem Produkt- und Markennamen Infinergy^{®} vertrieben. Siehe hierzu:
https://www.plasticsportal.net/wa/plasticsEU/portal/show/common/content/campaigns /infinergy/deutsch/index.html
https://www.plasticsportal.net/wa/plasticsEU/portal/show/common/content/campaigns /infinergy/deutsch/infinergy properties.html

Verfahren zur Herstellung von TPU sind beispielsweise in EP 0 692 510, WO 00/44821, EP 1 174 459 und EP 1 174 458 beschrieben.

### Offenlegung der Erfindung

Ausgehend hiervon stellt sich die Erfindung zur Aufgabe, die durch Trittbewegungen wechselseitig auftretenden Druckspitzen an den Gesäßknochen zu minimieren, den Dammbereich bzw. Schambeinbereich zu entlasten und Rückenbeschwerden vorzubeugen.

Die Aufgabe der Erfindung wird durch einen Zweiradsattel nach Anspruch 1 gelöst. Die abhängigen Ansprüche beanspruchen bevorzugte Ausführungsformen.

Ein erfindungsgemäßer Zweiradsattel umfasst eine Sattelbasis mit einer ersten Elastizität, die sich von der Sattelnase unter dem Gesäß des Anwenders erstreckt, wobei an der Sattelbasis zumindest ein Befestigungselement zum Befestigen des Zweiradsattels an einem Rahmen des Zweirades vorgesehen ist. Der Zweiradsattel umfasst ferner eine elastische Schicht, die thermoplastisches Polyurethan aufweist und die sich über die Sattelbasis zumindest im Bereich unterhalb des Gesäßes des Nutzers erstreckt. Die elastische Schicht weist eine zweite Elastizität auf, die elastischer als die erste Elastizität ist. Der Zweiradsattel umfasst ein erstes (rechtes) Gesäßknochenauflageelement, das dazu ausgebildet ist, sich zumindest über einen Teil des rechten Gesäßknochens eines Nutzers zu erstrecken. Der Zweiradsattel umfasst ferner ein zweites (linkes) Gesäßknochenauflageelement, das dazu ausgebildet ist, sich zumindest über einen Teil des linken Gesäßknochens eines Nutzers zu erstrecken. Das erste Gesäßknochenauflageelement und das zweite Gesäßknochenauflageelement sind auf der elastischen Schicht beabstandet zueinander angeordnet. Das erste und das zweite Gesäßknochenauflageelement nehmen die Last auf, die durch den jeweiligen Gesäßknochen eines Nutzers auf den Sattel ausgeübt wird. Da die Gesäßknochenauflageelemente von der elastischen Schicht gestützt werden, können sie sich unter Last nach unten federnd bewegen, wodurch der Komfort des Nutzers erhöht wird, die Druckspitzen an den Gesäßknochen minimiert und Rückenschmerzen vermieden werden.

Der Ausdruck elastische Schicht bedeutet nicht notwendigerweise, dass die elastische Schicht dünn sein muss. Die elastische Schicht kann eine elastische Lage, eine Polsterung oder dergleichen sein. Die elastische Schicht kann bei einer Ausführungsform beispielsweise eine Dicke von etwa 0,5 cm bis 1 cm aufweisen. Eine elastische Schichte einer anderen Ausführungsform kann eine andere Dicke aufweisen.

Da das erste Gesäßknochenauflageelement und das zweite Gesäßknochenauflageelement als getrennte Teile ausgeführt sind, können sie sich unabhängig voneinander bewegen. Dadurch wird der Komfort des Nutzers zusätzlich gesteigert. Die Gesäßknochenauflageelemente sind austauschbar und das erste und das zweite Gesäßknochenauflageelement können aus einer Mehrzahl von Typen von Gesäßknochenauflageelementen ausgewählt werden, um so dem Nutzer den höchsten möglichen Komfort durch das jeweils am besten geeignete Gesäßknochenauflageelement bereitzustellen.

Bei einer Ausführungsform kann sich die elastische Schicht bis zur Sattelnase erstrecken. Alternativ hierzu oder zusätzlich kann sich die elastische Schicht bis zum Rand der Sattelbasis erstrecken. Alternativ hierzu oder zusätzlich kann sich die elastische Schicht über den Rand der Sattelbasis erstrecken. Generell gilt, je weiter sich die elastische Schicht in Richtung Sattelnase erstreckt, desto höher ist der Komfort für den Nutzer. Je weiter sich die elastische Schicht über den Rand der Sattelbasis erstreckt, desto höher ist die mechanische Stabilität der elastischen Schicht bzw. des Zweiradsattels.

Bei einer Ausführungsform weisen das erste Gesäßknochenauflageelement und das zweite Gesäßknochenauflageelement eine dritte Elastizität auf, die weniger elastisch als die zweite Elastizität ist und elastischer als die erste Elastizität ist. Dadurch kann ein möglichst deterministisches Verhalten des Zweiradsattels erreicht werden. Zum einen wird die elastische Schicht gleichmäßig und stabil von der Sattelbasis gestützt. Da die Gesäßknochenauflageelemente eine niedrigere Elastizität als die elastische Schicht aufweisen, wird ein möglichst großer Bereich der elastischen Schicht zur elastischen Lagerung der Gesäßknochenauflageelemente verwendet.

Bei einer Ausführungsform erstrecken sich das erste Gesäßknochenauflageelement und das zweite Gesäßknochenauflageelement zumindest über den Bereich, den der Nutzer im Einsatz mit dem jeweiligen Gesäßknochen berührt. Bei einer anderen Ausführungsform erstrecken sich das erste Gesäßknochenauflageelement und das zweite Gesäßknochenauflageelement zumindest über den Bereich, den der Nutzer mit der jeweiligen Gesäßbacke berührt.

Das erste Gesäßknochenauflageelement und das zweite Gesäßknochenauflageelement erstrecken sich nicht über den Bereich, über den sich der Schambeinbogen eines weiblichen Nutzers bzw. der Dammbereich eines männlichen Nutzers befinden. Dadurch kann vermieden werden, dass der Schambeinbogen eines weiblichen Nutzers bzw. der Dammbereich eines männlichen Nutzers belastet wird, insbesondere wenn sich der Nutzer in einer nach vorne gebeugten Stellung auf dem Zweirad befindet.

Bei einer Ausführungsform ist in der elastischen Schicht eine Ausnehmung unter dem Schambeinbogen des weiblichen Nutzers bzw. unter dem Dammbereich eines männlichen Nutzers ausgebildet. Dadurch werden der Schambeinbogen eines weiblichen Nutzers bzw. der Dammbereich eines männlichen Nutzers weiter entlastet.

Bei einer Ausführungsform ist in der elastischen Schicht zwischen dem ersten Gesäßknochenauflageelement und dem zweiten Gesäßknochenauflageelement eine Ausnehmung ausgebildet, die sich in Längsrichtung unter dem Schambeinbogen eines weiblichen Nutzers bzw. dem Dammbereich eines männlichen Nutzers in Richtung hinteres Ende des Zweiradsattels erstreckt. Die Ausnehmung kann eine Vertiefung umfassen. Die Ausnehmung kann sich bis zum hinteren Ende des Zweiradsattels erstrecken.

Bei einer Ausführungsform kann sich das erste Gesäßknochenauflageelement bis zum rechten Rand der elastischen Schicht erstrecken. Das zweite Gesäßknochenauflageelement kann sich bis zum linken Rand der elastischen Schicht erstrecken. Da sich ein Gesäßknochenauflageelement über den Rand der elastischen Schicht erstreckt, wird die elastische Schicht von mechanischen Belastungen in deren Querrichtung geschützt.

Bei einer Ausführungsform weist der Zweiradsattel ein Sattelnaseauflageelement auf, das sich über der elastischen Schicht befindet und sich von der Sattelnase in Richtung erstem Gesäßknochenauflageelement und zweitem Gesäßknochenauflageelement erstreckt.

Bei einer Ausführungsform kann das Sattelnaseauflageelement eine Ausnehmung im Schambeinbereich eines weiblichen Nutzers bzw. im Dammbereich eines männlichen Nutzers aufweisen. Alternativ hierzu oder zusätzlich kann das Sattelnaseauflageelement eine vierte Elastizität aufweisen, die elastischer als die dritte Elastizität aber weniger elastisch als die zweite Elastizität ist. Alternativ hierzu oder zusätzlich kann sich das Sattelnaseauflageelement bis zum rechten, linken und vorderen Rand der Sattelnase erstrecken. Es ist auch möglich, dass sich das Sattelnaseauflageelement bis über den rechten, linken und vorderen Rand der Sattelnase erstreckt.

Bei einer Ausführungsform kann in der Sattelbasis eine Ausnehmung unter dem Schambeinbogen eines weiblichen Nutzers bzw. dem Dammbereich eines männlichen Nutzers gebildet sein, um den Schambeinbogen bzw. dem Dammbereich zu entlasten. Der Ausdruck Ausnehmung kann eine Vertiefung oder eine Öffnung umfassen.

In der Sattelbasis kann zwischen dem ersten Gesäßknochenauflageelement und den zweiten Gesäßknochenauflageelement eine Ausnehmung gebildet sein, die sich in Längsrichtung unter dem Schambeinbogen eines weiblichen Nutzers bzw. dem Dammbereich eines männlichen Nutzers in Richtung hinteres Ende des Zweiradsattels erstreckt.

Dadurch können der Schambeinbogen bzw. der Dammbereich des Nutzers weiter entlastet werden.

Bei einer Ausführungsform kann der hintere Bereich des ersten Gesäßknochenauflageelements in vertikaler Richtung weiter von dem Sattelbefestigungselement als der vordere Bereich des ersten Gesäßknochenauflageelements entfernt sein. Der hintere Bereich des zweiten Gesäßknochenauflageelements kann in vertikaler Richtung weiter von dem Sattelbefestigungselement als der vordere Bereich des zweiten Gesäßknochenauflageelements entfernt sein. Dadurch ist aus Sicht des Nutzers der Zweiradsattel hinten höher als vorne, sog. Stufensattel, wodurch sich eine ergonomische Sitzstellung, insbesondere bei einer gebeugten Stellung des Nutzers, ergibt.

Alternativ hierzu oder zusätzlich kann der hintere Bereich des ersten Gesäßknochenauflageelements und/oder des zweiten Gesäßknochenauflageelements in vertikaler Richtung weiter von dem Sattelbefestigungselement als das Sattelnaseauflageelement entfernt sein. Auch hierdurch ergibt sich eine möglichst ergonomische Stellung des Nutzers, insbesondere bei einer gebeugteen Stellung des Nutzers, wenn er auf dem Zweiradsattels sitzt, da er eine zusätzliche Stütze des Gesäßes von hinten erfährt.

Bei einer Ausführungsform kann eine Formgedächtnisschicht zwischen der elastischen Schicht und dem ersten Gesäßknochenauflageelement, dem zweiten Gesäßknochenauflageelement und/oder dem zweiten Sattelnaseauflageelement angeordnet sein. Die Formgedächtnisschicht kann als so genannter "Memory Foam" (Gedächtnisschaum), beispielsweise Formgedächtnispolymer ausgebildet sein. Die Formgedächtnisschicht kann sich zwischen die Kugeln der elastischen Schicht erstrecken. Die Formgedächtnisschicht ist elastisch und kehrt wieder zu ihrer früheren Form zurück. Da sich die Formgedächtnisschicht der Form der Kugeln der elastischen Schicht anpasst, kann das Gewicht des Nutzers auf einen größeren Bereich der elastischen Schicht verteilt werden und nicht lediglich auf einzelne Kugeln des thermoplastischen Polyurethan.

Das erste Gesäßknochenauflageelement und/oder das zweite Gesäßknochenauflageelement und/oder das Sattelnaseauflageelement können lösbar an der elastischen Schicht und/oder der Formgedächtnisschicht angebracht sein. Dadurch lässt sich der Zweiradsattel vergleichsweise einfach für den Nutzer konfigurieren, indem der am besten geeignete Typ von erstem Gesäßknochenauflageelement, zweitem Gesäßknochenauflageelement und Sattelnaseauflageelement in Abhängigkeit der Präferenzen des Nutzers an der elastischen Schicht angebracht wird. Die Auflageelemente können mittels eines Gelklebers oder dergleichen an der elastischen Schicht und/oder der Formgedächtnisschicht lösbar angebracht werden. Dadurch, dass das erste Gesäßknochenauflageelement, das zweite Gesäßknochenauflageelement und das dritte Sattelnaseauflageelement eine niedrigere Elastizität als die elastische Schicht aus dem thermoplastischen Polyurethan aufweisen, wird die durch das Gewicht des Nutzers erzeugte Kraft nicht in einzelne Kügelchen des thermoplastischen Polyurethan geleitet, sondern auf eine vergleichsweise große Fläche verteilt. Dadurch wird die mechanische Belastung der elastischen Schicht reduziert. Dieser Effekt wird durch die Formgedächtnisschicht verstärkt.

Die Erfindung wird nun unter Bezugnahme auf die beigefügten Figuren erläutert, die exemplarische und nicht beschränkende Ausführungsformen der vorliegenden Erfindung zeigen, wobei
Figur 1 eine perspektivische Seitenansicht des erfindungsgemäßen Zweiradsattels zeigt;
Figur 2 eine perspektivische Rückansicht des erfindungsgemäßen Zweiradsattels zeigt;
Figur 3 eine Ansicht von schräg hinten des erfindungsgemäßen Zweiradsattels zeigt;
Figur 4 eine perspektivische Frontansicht bzw. eine Vorderansicht des erfindungsgemäßen Zweiradsattels zeigt;
Figur 5 eine perspektivische Explosionsansicht des erfindungsgemäßen Zweiradsattels ohne Formgedächtnisschicht zeigt;
Figur 6 eine perspektivische Explosionsansicht des erfindungsgemäßen Zweiradsattels mit Formgedächtnisschicht zeigt;
Figur 7 eine Draufsicht von oben auf den erfindungsgemäßen Zweiradsattel mit Formgedächtnisschicht zeigt; und
Figur 8 einen Querschnitt des erfindungsgemäßen Zweiradsattels mit Formgedächtnisschicht zeigt.

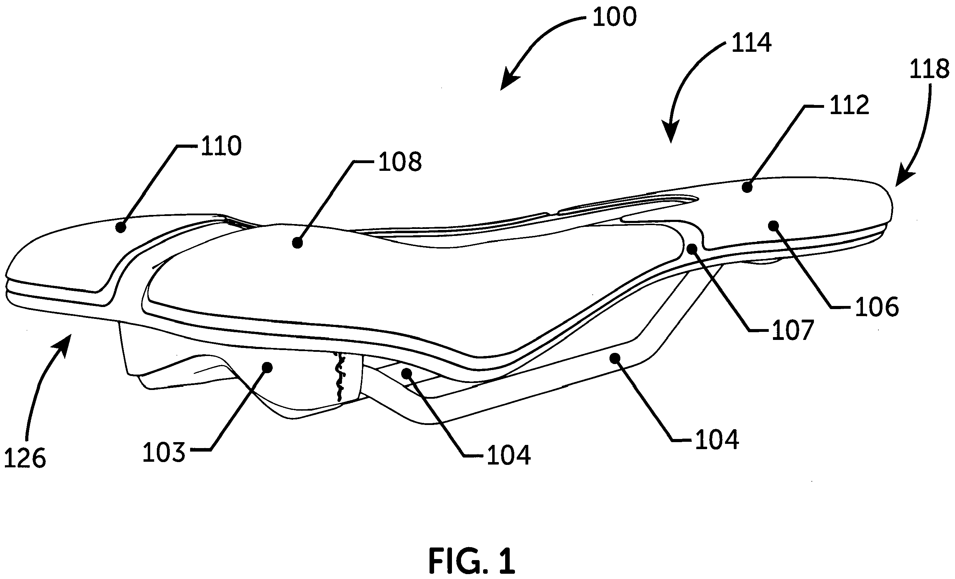

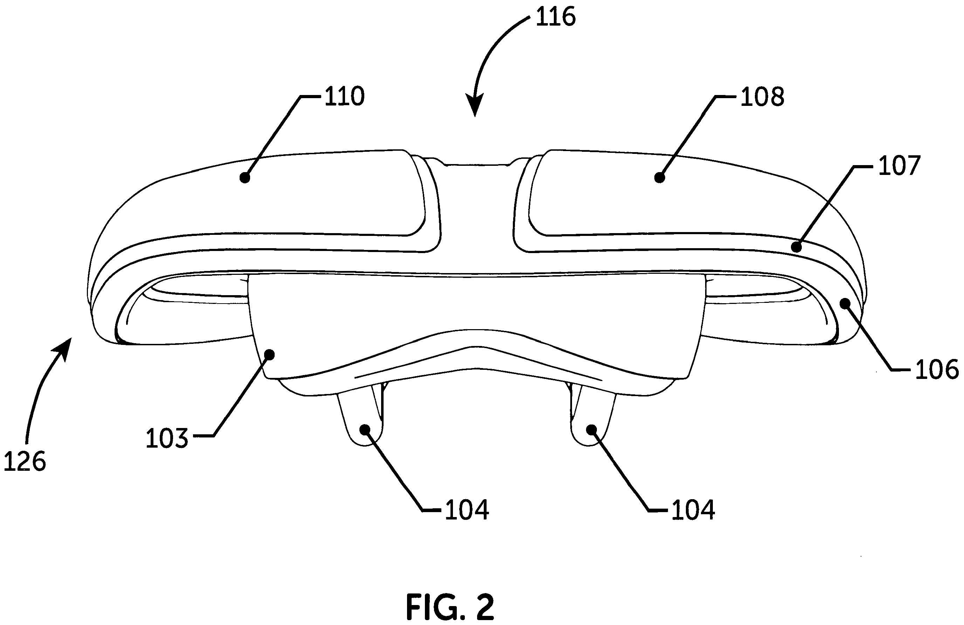

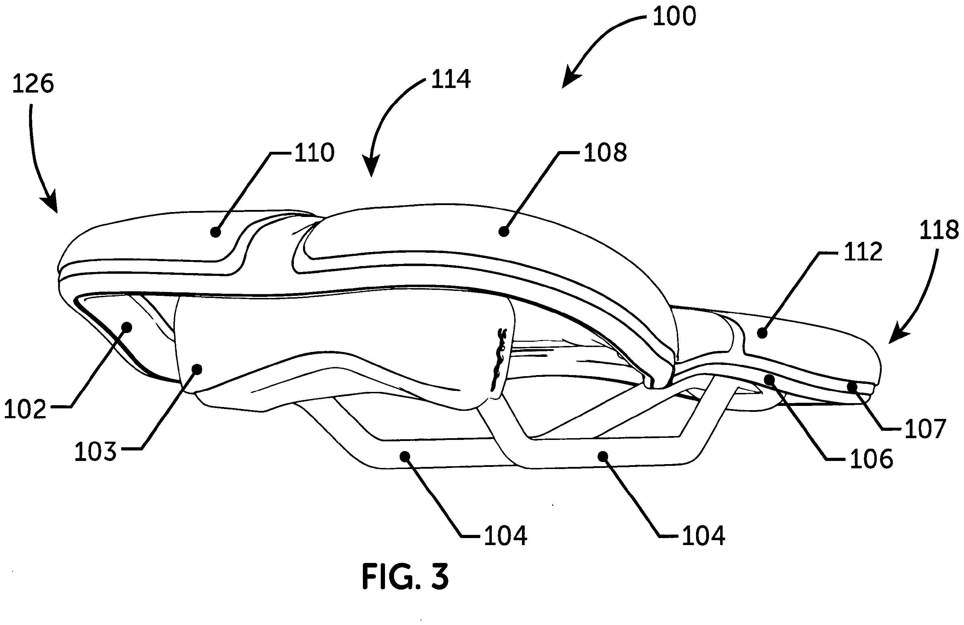

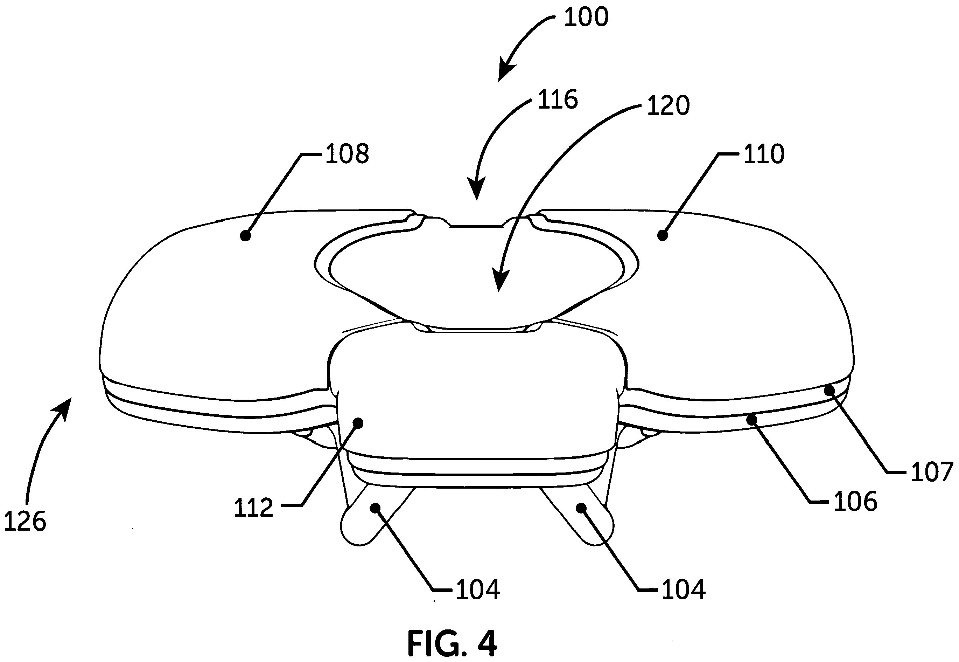

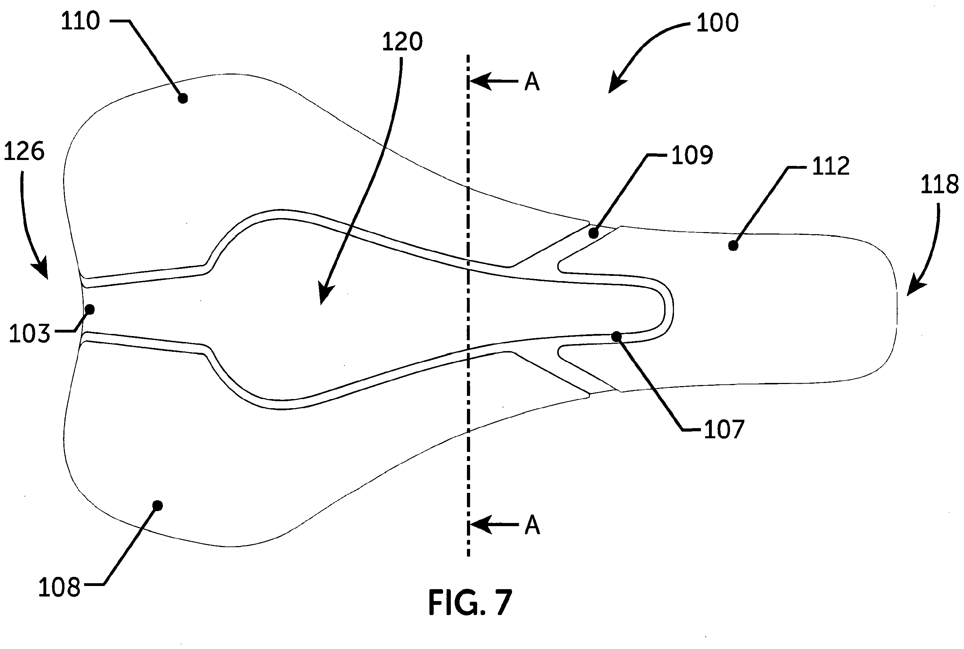

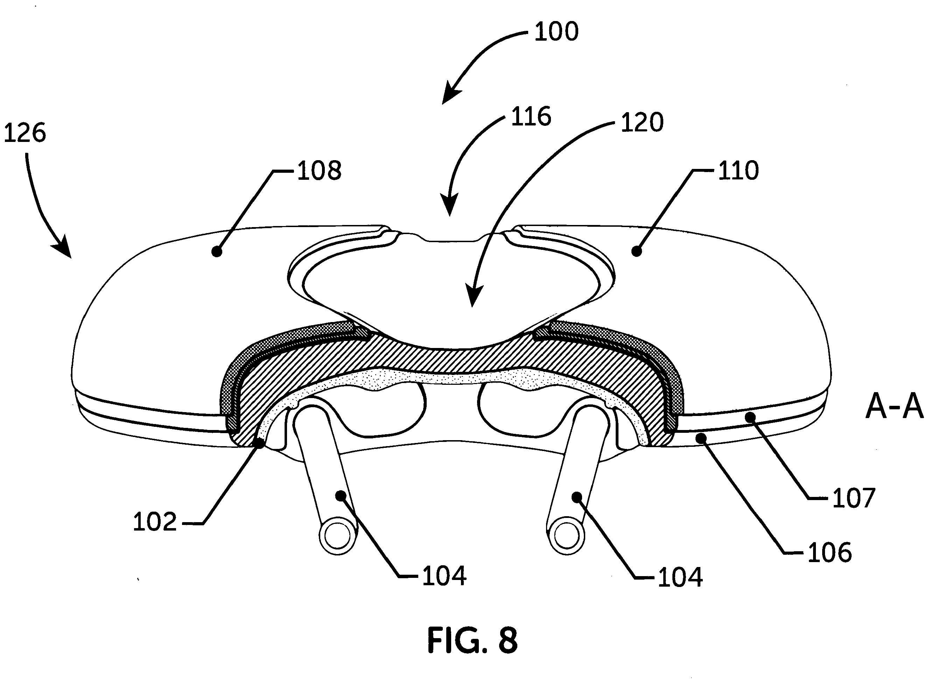

Unter Bezugnahme auf Figuren 1 bis 8 wird eine Ausführungsform des erfindungsgemäßen Zweiradsattels 100 beschrieben. Der erfindungsgemäße Zweiradsattel 100 umfasst eine Sattelbasis 102 mit einem Sattelgestell mit zwei Streben 104, um den Zweiradsattel 100 am Rahmen eines Zweirades zu befestigen. Die Sattelbasis 102 erstreckt sich von der Sattelnase 118, die in Fahrtrichtung des Zweirades nach vorne gerichtet ist, zum hinteren Bereich 126 des Zweiradsattels, der in Fahrtrichtung des Zweirades nach hinten gerichtet ist und der im Wesentlichen das Gesäß des Nutzers stützt. Die Sattelbasis ist im hinteren Bereich 126 deutlich breiter als im Bereich der Sattelnase 118.

Über der Sattelbasis 102 ist eine elastische Schicht 106 angeordnet. Die elastische Schicht 106 erstreckt sich über die gesamte Oberseite der Sattelbasis 102 von der Sattelnase 118 bis zum hinteren Bereich 126. Die elastische Schicht 106 kann eine Dicke von etwa 0,3 cm bis etwa 1,5 cm, vorzugsweise von etwa 0,5 cm bis etwa 1 cm, aufweisen. In dem hinteren Bereich der Sattelbasis ist unterhalb ein weiches Dämpfungselement 103 angeordnet, welches die seitliche Kippbewegung der Sattelbasis nach links und rechts dämpft und durch die Befestigung der Sattelstreben 104 begrenzt wird.

Die elastische Schicht 106 ist aus einem thermoplastischen Polyurethan (TPU), vorzugsweise aus expandiertem thermoplastischem Polyurethan (E-TPU), hergestellt. Ein thermoplastisches Polyurethan weist eine hohe Verschleißfestigkeit, eine hohe Abriebfestigkeit, eine hohe Zugfestigkeit und einen hohen Weiterreißwiderstand auf. Ferner weist ein thermoplastisches Polyurethan ein gutes Dämpfungsverhalten, eine gute Kälteflexibilität sowie eine hohe Beständigkeit gegen Öle, Fette, Sauerstoff und Ozon auf. Ein thermoplastisches Polyurethan behält seine elastischen Eigenschaften über einen weiten Temperaturbereich, weist keine Weichmacher auf und weist eine gute Beständigkeit gegen Witterungseinflüsse auf. Ferner werden die elastischen Eigenschaften über einen langen Zeitraum aufrechterhalten. Das thermoplastische Polyurethan kann eine Mehrzahl verpresster und/oder verklebter Kugeln aufweisen, wie z.B. beim E-TPU. Die besonderen Vorteile von expandiertem thermoplastischem Polyurethan (E-TPU) sind u.a. eine hohe Elastizität, ein herausragendes Rückstellvermögen, eine hohe Abriebsbeständigkeit und eine hohe Dauerbelastbarkeit in einem breiten Temperaturfenster. E-TPU weist eine hohe Rückstellkraft auf und bleibt über eine weite Temperaturspanne hoch elastisch und weich. Besonders geeignetes E-TPU für die elastische Schicht 106 ist das von der Firma BASF unter dem Produkt- und Markennamen Infinergy^{®} hergestellte Material.

Über der elastischen Schicht 106 befindet sich eine optionale Formgedächtnisschicht 107. Die Formgedächtnisschicht 107 kann als so genannter "Memory Foam" (Gedächtnisschaum), beispielsweise Formgedächtnispolymer ausgebildet sein. Die Formgedächtnisschicht 107 kann sich zwischen die Kugeln der elastischen Schicht 106 erstrecken. Die Formgedächtnisschicht 107 ist elastisch und kehrt wieder zu ihrer früheren Form zurück. Da sich die Formgedächtnisschicht 107 der Form der Kugeln der elastischen Schicht 106 anpasst, kann das Gewicht des Nutzers auf einen größeren Bereich der elastischen Schicht 106 verteilt werden und nicht lediglich auf einzelne Kugeln des thermoplastischen Polyurethan der elastischen Schicht 106.

An der Nase 118 ist bei dieser Ausführungsform das Sattelnaseauflageelement 112 auf der elastischen Schicht 106 oder der optionalen Formgedächtnisschicht 107 angeordnet. Unter dem rechten Gesäßknochen eines Nutzers ist ein erstes Gesäßknochenauflageelement 108 auf der elastischen Schicht 106 oder der optionalen Formgedächtnisschicht 107 angeordnet. Unter dem linken Gesäßknochen des Nutzers ist ein zweites Gesäßknochenauflageelement 110 auf der elastischen Schicht 106 oder der optionalen Formgedächtnisschicht 107 angeordnet. Das Sattelnaseauflageelement 112, das erste (rechte) Gesäßknochenauflageelement 108 und das zweite (linke) Gesäßknochenauflageelement 110 berühren sich nicht. Die Sattelbasis 102 weist eine erste Elastizität auf, die elastische Schicht 106 weist eine zweite Elastizität auf, die elastischer als die erste Elastizität der Sattelbasis 102 ist, und das erste Gesäßknochenauflageelements 108, das zweite Gesäßknochenauflageelement 110 und das Sattelnaseauflageelement 112 weisen jeweils eine dritte Elastizität auf, die weniger elastisch als die Elastizität der elastischen Schicht 106 ist. Da das erste Gesäßknochenauflageelement, das zweite Gesäßknochenauflageelements und das Sattelnaseauflageelement weniger elastisch als die elastische Schicht sind, wird ein deterministisches Verhalten bewirkt. Da sich das erste Gesäßknochenauflageelement 108, das zweite Gesäßknochenauflageelement 110 und das Sattelnaseauflageelement 112 nicht berühren, ist die Dämpfung entkoppelt, wodurch dem Nutzer ein höherer Komfort bereitgestellt wird. Ferner wird die durch das Gewicht des Benutzers erzeugte Kraft gleichmäßiger in der elastischen Schicht 106 verteilt. Es versteht sich, dass das erste Gesäßknochenauflageelement, das zweite Gesäßknochenauflageelement das Sattelnaseauflageelement nicht notwendigerweise die gleiche dritte Elastizität aufweisen müssen.

Die die elastische Schicht 106 erstreckt sich über den Rand der Sattelbasis 102. Generell gilt, je weiter sich die elastische Schicht 106 in Richtung Sattelnase 118 erstreckt, desto höher ist der Komfort für den Nutzer. Je weiter sich die elastische Schicht 106 über den Rand der Sattelbasis erstreckt, desto höher ist die mechanische Stabilität der elastischen Schicht 106 bzw. des Zweiradsattels 100.

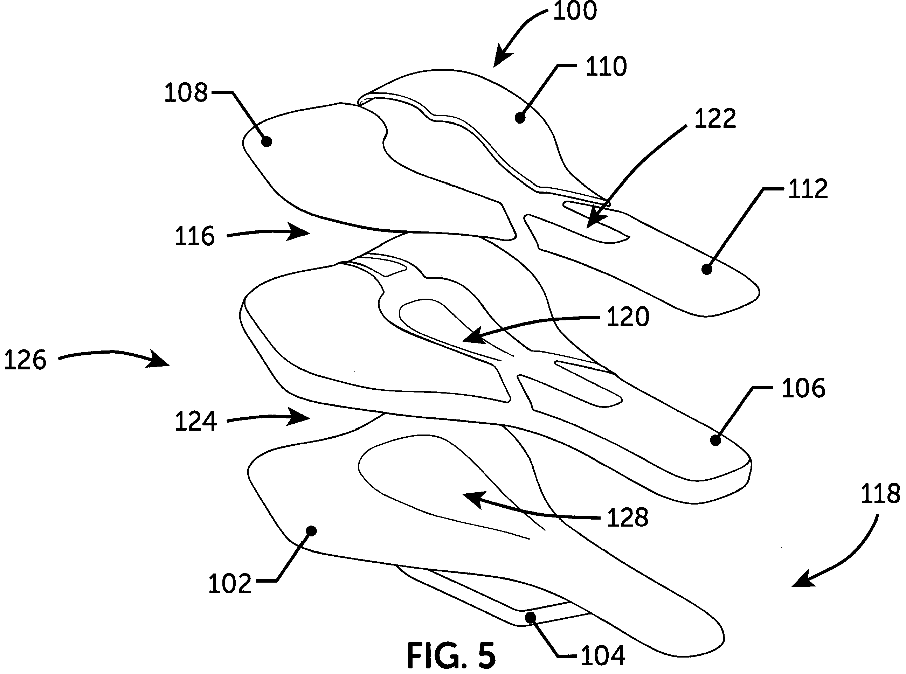

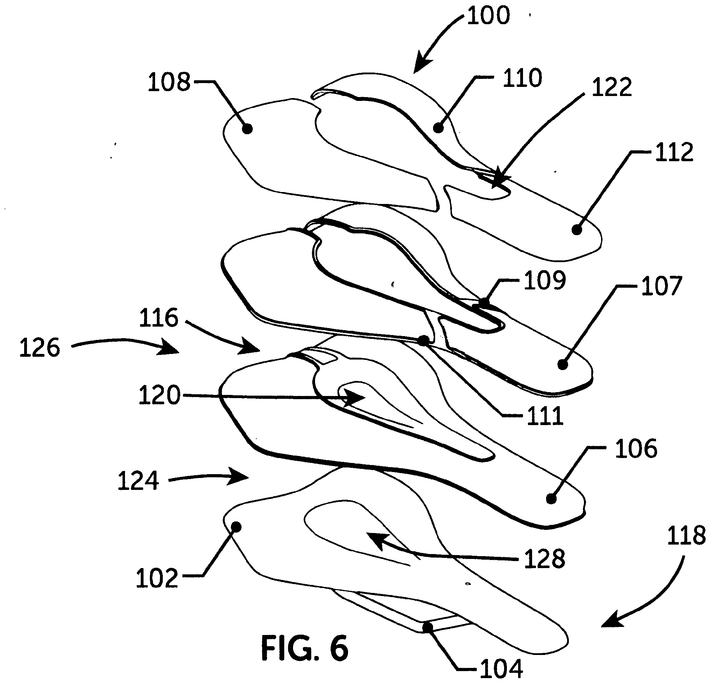

Insbesondere in Figur 5 ist zu erkennen, dass das erste Gesäßknochenauflageelements 110 und das zweite Gesäßknochenauflageelement 108 eine Ausnehmung unter dem Bereich des Schambeinbogens eines weiblichen Nutzers bzw. dem Dammbereich eines männlichen Nutzers aufweisen. In Figur 5 wurde zur Übersichtlichkeit die optionale Formgedächtnisschicht 107 weggelassen. Figur 6 zeigt den erfindungsgemäßen Zweiradsattel mit der Formgedächtnisschicht 107. Ferner kann das Sattelnaseauflageelement 112 eine Ausnehmung 122 unter dem Schambeinbogenbereich eines weiblichen Nutzers bzw. unter dem Dammbereich eines männlichen Nutzers aufweisen. Die elastische Schicht 106 kann ebenfalls eine Ausnehmung 120 unter dem Bereich des Schambeinbogens eines weiblichen Nutzers bzw. im Dammbereich eines männlichen Nutzers aufweisen. Die Sattelbasis 102 weist unter dem Bereich des Schambeinbogens eines weiblichen Nutzers bzw. unter dem Dammbereich eines männlichen Nutzers eine Ausnehmung 128 auf.

Die Ausnehmung 120 in der elastischen Schicht 106 kann die dargestellte Vertiefung sein, es ist aber auch möglich, dass die Ausnehmung 120 in der elastischen Schicht 106 eine Öffnung ist. Gleichermaßen kann die Ausnehmung 128 in der Sattelbasis 102 die dargestellte Vertiefung oder eine Öffnung sein. Bei dem ersten Gesäßknochenauflageelement 108, dem zweiten Gesäßknochenauflageelement 110 und dem Sattelnaseauflageelement 112 kann die Ausnehmung eine Einbuchtung, ein Einschnitt oder dergleichen in horizontaler Richtung sein, während sich die Vertiefung 120, 128 in der elastischen Schicht 106 und in der Sattelbasis 102 in vertikaler Richtung erstrecken. Durch die Ausnehmungen 120, 122, 128 unter dem Bereich des Schambeinbogens eines weiblichen Nutzers bzw. unter dem Dammbereich eines männlichen Nutzers wird der Komfort des Nutzers erhöht, weil der Bereich des Schambeinbogens eines weiblichen Nutzers bzw. der Dammbereich eines männlichen Nutzers mechanisch weniger belastet wird. Die Ausnehmungen 120, 122, 128 in der Sattelbasis 102, in der elastischen Schicht 106, im rechten Gesäßknochenauflageelement 108, im linken Gesäßknochenauflageelement 110 und/oder im Sattelnaseauflageelement 112 können in vertikaler Richtung übereinander liegen.

In der elastischen Schicht 106 ist zwischen dem ersten Gesäßknochenauflageelement 108 und dem zweiten Gesäßknochenauflageelement 110 eine Ausnehmung 116 ausgebildet, die sich in Längsrichtung unter dem Schambeinbogen eines weiblichen Nutzers bzw. dem Dammbereich eines männlichen Nutzers in Richtung hinteres Ende des Zweiradsattels erstreckt. Die Ausnehmung 116 kann eine Vertiefung umfassen. Die Ausnehmung 116 kann sich bis zum hinteren Ende 126 des Zweiradsattels 100 erstrecken.

Das erste (rechte) Gesäßknochenauflageelement 108 erstreckt bis zum rechten Rand der elastischen Schicht 106 über der optionalen Formgedächtnisschicht 107. Das zweite (linke) Gesäßknochenauflageelement 110 erstreckt sich bis zum linken Rand der elastischen Schicht 106 über der optionalen Formgedächtnisschicht 107. Da sich die Gesäßknochenauflageelemente 108, 110 über den Rand der elastischen Schicht 106 erstrecken, wird die elastische Schicht 106 von mechanischen Belastungen in deren Querrichtung geschützt. Das Sattelnaseauflageelement 112 erstreckt sich bis über den rechten, linken und vorderen Rand des elastischen Elementes 106 an der Sattelnase 118 über der optionalen Formgedächtnisschicht 107.

Die Formgedächtnisschicht 107 umfasst gegenüber der Auflagefläche des ersten Gesäßknochenauflageelements 108, der Auflagefläche des zweiten Gesäßknochenauflageelement 110 und der Auflagefläche des Sattelnaseauflageelements 112 erhöhte Befestigungsbereiche 109, 111, um das erste Gesäßknochenauflageelement 108, das zweite Gesäßknochenauflageelement 110 und das Sattelnaseauflageelement 112 in ihrer Stellung auf der Formgedächtnisschicht 107 zu halten. In der Formgedächtnisschicht 107 ist zwischen dem ersten Gesäßknochenauflageelement 108 und dem zweiten Gesäßknochenauflageelement 110 eine Ausnehmung 116 ausgebildet, die sich in Längsrichtung unter dem Schambeinbogen eines weiblichen Nutzers bzw. dem Dammbereich eines männlichen Nutzers in Richtung hinteres Ende des Zweiradsattels erstreckt.

Der hintere Bereich des ersten Gesäßknochenauflageelements 108 ist in vertikaler Richtung weiter von dem Sattelbefestigungselement 104 als der vordere Bereich des ersten Gesäßknochenauflageelements 108 entfernt. Der hintere Bereich des zweiten Gesäßknochenauflageelements 110 kann in vertikaler Richtung weiter von dem Sattelbefestigungselement 104 als der vordere Bereich des zweiten Gesäßknochenauflageelements 110 entfernt sein. Dadurch ist aus Sicht des Nutzers der Zweiradsattel 100 hinten höher als vorne, wodurch sich eine ergonomische Sitzstellung, insbesondere bei einer gebeugten Stellung des Nutzers, ergibt, da die Stufe zu einer Entlastung des Schambeinbogens einer weiblichen Nutzerin bzw. des Dammbereichs eines männlichen Nutzers führt.

Der hintere Bereich des ersten Gesäßknochenauflageelements 108 und des zweiten Gesäßknochenauflageelements ist 110 in vertikaler Richtung weiter von dem Sattelbefestigungselement 104 als das Sattelnaseauflageelement 104 entfernt. Auch hierdurch ergibt sich eine möglichst ergonomische Stellung des Nutzers, insbesondere bei einer gebeugten Stellung des Nutzers, wenn er auf dem Zweiradsattels 100 sitzt, da er eine zusätzliche Stütze des Gesäßes von hinten erfährt.

Das erste Gesäßknochenauflageelement 108 und das zweite Gesäßknochenauflageelement 110 können lösbar mit der elastischen Schicht 106 und/oder der optionalen Formgedächtnisschicht 107 verbunden werden, beispielsweise mittels eines so genannten Gel-Klebstoffs oder selbstadhäsiven Haftfolien oder -pads, sog. Sticky Gel Pads oder Fixate Gel Pads. Das erste und das zweite Gesäßknochenauflageelement 108, 110 können aus einer Mehrzahl unterschiedlicher Typen von Gesäßknochenauflageelementen 108, 110 ausgewählt werden, um einem Nutzer jeweils dasjenige Gesäßknochen-auflageelement 108, 110 bereitzustellen, das am besten für seine Bedürfnisse geeignet ist.

Ferner kann das Sattelnaseauflageelement 112 aus einer Mehrzahl von unterschiedlichen Typen von Sattelnaseauflageelementen 112 ausgewählt werden, um einem Nutzer das jeweils am besten geeignete Sattelnaseauflageelement 112 bereitzustellen. Auch das Sattelnaseauflageelement 112 kann mittels eines sogenannten Gel-Klebstoffs oder selbstadhäsiver Haftfolien oder -pads, sog. Sticky Gel Pads oder Fixate Gel Pads, an der elastischen Schicht 106 und/oder Formgedächtnisschicht 107 befestigt werden.

Da das elastische Element 106 ein thermoplastisches Polyurethan (TPU) aufweist, weist der erfindungsgemäße Zweiradsattel 100 besonders komfortable und langlebige Dämpfungseigenschaften auf. Insbesondere werden der rechte Gesäßknochen und der linken Gesäßknochen unabhängig voneinander gestützt und gedämpft, wodurch Rückenschmerzen vermieden werden und die Druckspitzen an den Gesäßknochen reduziert, minimiert und vermieden werden.

## Patentansprüche

1. Zweiradsattel (100), aufweisend:
- eine Sattelbasis (102) mit einer ersten Elastizität, die sich von der Sattelnase (118) unter dem Gesäß eines Anwenders erstreckt, wobei an der Sattelbasis (102) zumindest ein Befestigungselement (104) zum Befestigen des Zweiradsattels (100) an einem Rahmen eines Zweirads vorgesehen ist;
- eine elastische Schicht (106), die thermoplastisches Polyurethan (TPU), vorzugsweise expandiertes thermoplastisches Polyurethan (E-TPU), aufweist und die sich über die die Sattelbasis (102) zumindest im Bereich unterhalb des Gesäßes des Nutzers erstreckt, wobei die elastische Schicht (106) eine zweite Elastizität aufweist, die elastischer als die erste Elastizität ist;
- ein erstes Gesäßknochenauflageelement (108), das dazu ausgebildet ist, sich zumindest über einen Teil des rechten Gesäßknochens eines Nutzers zu erstrecken; und
- ein zweites Gesäßknochenauflageelement (110), das dazu ausgebildet ist, sich zumindest über einen Teil des linken Gesäßknochens eines Nutzers zu erstrecken;
- wobei das erste Gesäßknochenauflageelement (108) und das zweite Gesäßknochenauflageelement (110) auf der elastischen Schicht (106) beabstandet zueinander angeordnet sind.

2. Zweiradsattel (100) nach Anspruch 1, wobei der Zweiradsattel (100) zumindest eine der folgenden Eigenschaften aufweist:
- Die elastische Schicht (106) erstreckt sich bis zur Sattelnase (118);
- Die elastische Schicht (106) erstreckt sich bis zum Rand der Sattelbasis (102);
- Die elastische Schicht (106) erstreckt sich über den Rand der Sattelbasis (102).

3. Zweiradsattel (100) nach Anspruch 1 oder 2, wobei das erste Gesäßknochenauflageelement (108) und das zweite Gesäßknochenauflageelement (110) eine dritte Elastizität aufweisen, die weniger elastisch als die zweite Elastizität ist und elastischer als die erste Elastizität ist.

4. Zweiradsattel (100) nach einem der Ansprüche 1 bis 3, wobei sich das erste Gesäßknochenauflageelement (108) und das zweite Gesäßknochenauflageelement (110) über zumindest einen der folgenden Bereiche erstrecken:
- den Bereich, den der Nutzer im Einsatz mit dem jeweiligen Gesäßknochen berührt;
- den Bereich, den der Nutzer mit der jeweiligen Gesäßbacke berührt.

5. Zweiradsattel (100) nach Anspruch 4, wobei sich das erste Gesäßknochenauflageelement (108) und das zweite Gesäßknochenauflageelement (110) nicht über zumindest einen der folgenden Bereiche erstreckt:
- den Schambeinbogen eines weiblichen Nutzers;
- den Dammbereich eines männlichen Nutzers.

6. Zweiradsattel (100) nach einem der Ansprüche 1 bis 5, wobei in der elastischen Schicht (106) eine Ausnehmung (120) unter zumindest einem von Folgendem gebildet ist
- dem Schambeinbogen eines weiblichen Nutzers;
- dem Dammbereich eines männlichen Nutzers.

7. Zweiradsattel (100) nach einem der Ansprüche 1 bis 6, wobei in der elastischen Schicht (106) zwischen dem ersten Gesäßknochenauflageelement und dem zweiten Gesäßknochenauflageelement eine Ausnehmung (116) gebildet ist, die sich in Längsrichtung unter zumindest einem von Folgendem in Richtung hinteres Ende des Zweiradsattels (100) erstreckt:
- dem Schambeinbogen eines weiblichen Nutzers;
- dem Dammbereich eines männlichen Nutzers.

8. Zweiradsattel (100) nach einem der Ansprüche 1 bis 7, wobei sich das erste Gesäßknochenauflageelement (108) bis zum rechten Rand der elastischen Schicht (106) erstreckt und sich das zweite Gesäßknochenauflageelement (110) bis zum linken Rand der elastischen Schicht (106) erstreckt.

9. Zweiradsattel (100) nach einem der Ansprüche 1 bis 8, wobei sich das erste Gesäßknochenauflageelement (108) über den rechten Rand der elastischen Schicht (106) erstreckt und sich das zweite Gesäßknochenauflageelement (110) über den linken Rand der elastischen Schicht (106) erstreckt.

10. Zweiradsattel (100) nach einem der Ansprüche 1 bis 9, ferner aufweisend ein Sattelnaseauflageelement (112), das sich über der elastischen Schicht (106) befindet und sich von der Sattelnase (118) in Richtung erstem Gesäßknochenauflageelement (108) und zweitem Gesäßknochenauflageelement (110) erstreckt.

11. Zweiradsattel (100) nach Anspruch 10, wobei das Sattelnaseauflageelement (112) zumindest eine der folgenden Eigenschaften aufweist:
- eine Ausnehmung (122) im Bereich des Schambeinbogens eines weiblichen Nutzers;
- eine Ausnehmung im Dammbereich eines männlichen Nutzers;
- das Sattelnaseauflageelement (112) weist eine vierte Elastizität auf, die elastischer ist als die dritte Elastizität aber weniger elastisch ist als die zweite Elastizität;
- das Sattelnaseauflageelement (112) erstreckt sich bis zum rechten, linken und vorderen Rand der Sattelnase (118);
- das Sattelnaseauflageelement (112) erstreckt sich bis über den rechten, linken und vorderen Rand der Sattelnase (118).

12. Zweiradsattel (100) nach einem der Ansprüche 1 bis 11, wobei in der Sattelbasis (102) eine Ausnehmung (128) unter zumindest einem von Folgendem gebildet ist
- dem Schambeinbogen eines weiblichen Nutzers;
- dem Dammbereich eines männlichen Nutzers; und/oder wobei in der Sattelbasis (102) zwischen dem ersten Gesäßknochenauflageelement und dem zweiten Gesäßknochenauflageelement eine Ausnehmung gebildet ist, die sich in Längsrichtung unter zumindest einem von Folgendem in Richtung hinteres Ende des Zweiradsattels (100) erstreckt:
- dem Schambeinbogen eines weiblichen Nutzers;
- dem Dammbereich eines männlichen Nutzers.

13. Zweiradsattel (100) nach einem der Ansprüche 1 bis 12, aufweisend zumindest eine der folgenden Eigenschäften:
- der hintere Bereich des ersten Gesäßknochenauflageelements (108) ist in vertikaler Richtung weiter von dem Sattelbefestigungselement (104) als der vordere Bereich des ersten Gesäßknochenauflageelements (108) entfernt;
- der hintere Bereich des zweiten Gesäßknochenauflageelements (110) ist in vertikaler Richtung weiter von dem Sattelbefestigungselement (104) als der vordere Bereich des zweiten Gesäßknochenauflageelements (110) entfernt;
- der hintere Bereich des ersten Gesäßknochenauflageelements (108) ist in vertikaler Richtung weiter von dem Sattelbefestigungselement (104) als das Sattelnaseauflageelement (112) entfernt;
- der hintere Bereich des zweiten Gesäßknochenauflageelements (110) ist in vertikaler Richtung weiter von dem Sattelbefestigungselement (104) als das Sattelnaseauflageelement (112) entfernt.

14. Zweiradsattel (100) nach einem der Ansprüche 1 bis 13, wobei eine Formgedächtnisschicht (107) zwischen der elastischen Schicht (106) und zumindest einem von Folgendem angeordnet ist:
- dem ersten Gesäßknochenauflageelement (108);
- dem zweiten Gesäßknochenauflageelement (110);
- dem Sattelnaseauflageelement (112).

15. Zweiradsattel (100) nach einem der Ansprüche 1 bis 14, aufweisend zumindest eine der folgenden Eigenschaften:
- das erste Gesäßknochenauflageelement (108) ist lösbar an der elastischen Schicht (106) angebracht;
- das zweite Gesäßknochenauflageelement (110) ist lösbar an der elastischen Schicht (106) angebracht;
- das Sattelnaseauflageelement (112) ist lösbar an der elastischen Schicht (106) angebracht;
- das erste Gesäßknochenauflageelement (108) ist lösbar an der Formgedächtnisschicht (107) angebracht;
- das zweite Gesäßknochenauflageelement (110) ist lösbar an der Formgedächtnisschicht (107) angebracht;
- das Sattelnaseauflageelement (112) ist lösbar an der Formgedächtnisschicht (107) angebracht.
